# EUROPEAN PATENT SPECIFICATION

(11) **EP 4 613 511 B1**
(45) Date of publication and mention of the grant of the patent: **25.11.2026**
(21) Application number: 25156220.3
(22) Date of filing: 06.02.2025
(51) Int. Cl.: B60C 15/00, B60C 15/06

(54) **PNEUMATIC TIRE**
LUFTREIFEN
PNEUMATIQUE

(30) Priority: 08.03.2024 JP 2024036116
(43) Date of publication of application: 10.09.2025
(73) Proprietor: Sumitomo Rubber Industries, Ltd., Kobe-shi, Hyogo 651-0072 (JP)
(72) Inventor: KOIDE, Tatsuya, Kobe-shi, 651-0072 (JP)
(74) Representative: Manitz Finsterwald Patent- und Rechtsanwaltspartnerschaft mbB

(56) References cited:
- EP-B1- 3 112 189
- EP-B1- 3 354 487
- EP-B1- 3 895 916
- JP-A- 2002 137 608
- US-A1- 2021 094 363

## Description

### Technical field

The present invention relates to a pneumatic tire.

### Background art

Various pneumatic tires suitable for high-speed running have been proposed. For example, Patent Document 1 below discloses a pneumatic tire in which, in order to improve durability while achieving a weight reduction, the bead portion is provided with a bead reinforcing cord layer comprising a first portion disposed on the axially outside of a carcass ply main portion and a second portion disposed on the axially inside of a carcass ply turnup portion. Other pneumatic tires having a bead portion a provided with a bead reinforcing cord layer are disclosed in EP 3354487 B1, US 2021/094363 A1 and EP 3112189 B1.

Patent Document 1: Japanese Patent Application Publication No. 2021-172104

### Summary of the invention

### Problems to be solved by the invention

In the bead reinforcing cord layer disclosed in Patent Document 1, as the first portion and the second portion are close to each other, there may be cases where the cord tensions of the respective parts act on them mutually, and as a result, the desired reinforcing effect on the vertical stiffness, lateral stiffness and forward/backward stiffness of the bead portion can not be achieved.

The present invention was therefore, made in view of the above-described circumstances, and
a primary objective of the present invention is to provide a pneumatic tire in which driving force and steering stability can be improved, while achieving lightweight.

### Means for solving the Problems

According to the present invention, a pneumatic tire comprises:
a pair of bead portions each with a bead core embedded therein;
a carcass extending between the bead portions through a tread portion and sidewall portions;
a bead reinforcing layer disposed in each of the bead portions; and
a bead apex rubber extending radially outwardly from the bead core in each of the bead portions,
wherein
the carcass comprises a first carcass ply of carcass cords arranged at an angle of 60 to 90 degrees with respect to the tire circumferential direction,
the bead reinforcing layer comprises a first reinforcing ply of bead reinforcing cords arranged at an angle of 60 to 90 degrees with respect to the tire circumferential direction,
the first carcass ply comprises a main portion and a pair of turnup portions continued from the main portion and each folded back around the bead core from the inside to the outside in the tire axial direction,
in each of the bead portions, the first reinforcing ply comprises

a first portion disposed along the main portion of the first carcass ply, and
a second portion continued from the first portion and folded back around the bead core from the inside to the outside in the tire axial direction so as to be disposed along the turnup portion of the first carcass ply, and
   a radially outer end of the second portion is located on the axially outside of the bead apex rubber and on the radially inside of a radially outer end of the bead apex rubber.

The carcass comprises a second carcass ply in addition to the first carcass ply, wherein
the second carcass ply is made of carcass cords arranged at an angle of 60 to 90 degrees with respect to the tire circumferential direction, and extends between the bead portions through the tread portion and the sidewall portions, and
the second carcass ply extends radially inwardly from the tread portion to each of the bead portions, abutting on the first carcass ply, an axially outer side of the first portion of the bead reinforcing layer, an axially outer side of the bead apex rubber, an axially outer side of the second portion the bead reinforcing layer, and an axially outer side of the turnup portion of the first carcass ply in this order, and terminates in the bead portion without being folded back around the bead core to have a radially inner end on the axially outside of the bead core.

### Effects of the Invention

By having the above-described structure, the pneumatic tire according to the present invention can be improved in driving force and steering stability while achieving a weight reduction.

### Brief description of the Drawings

FIG. 1 is a cross-sectional view of a pneumatic tire as an embodiment of the present invention.
FIG. 2 is an enlarged view showing the sidewall portion and bead portion thereof.

### Detailed description of the Invention

An embodiment of the present invention will now be described in detail in conjunction with the drawings.

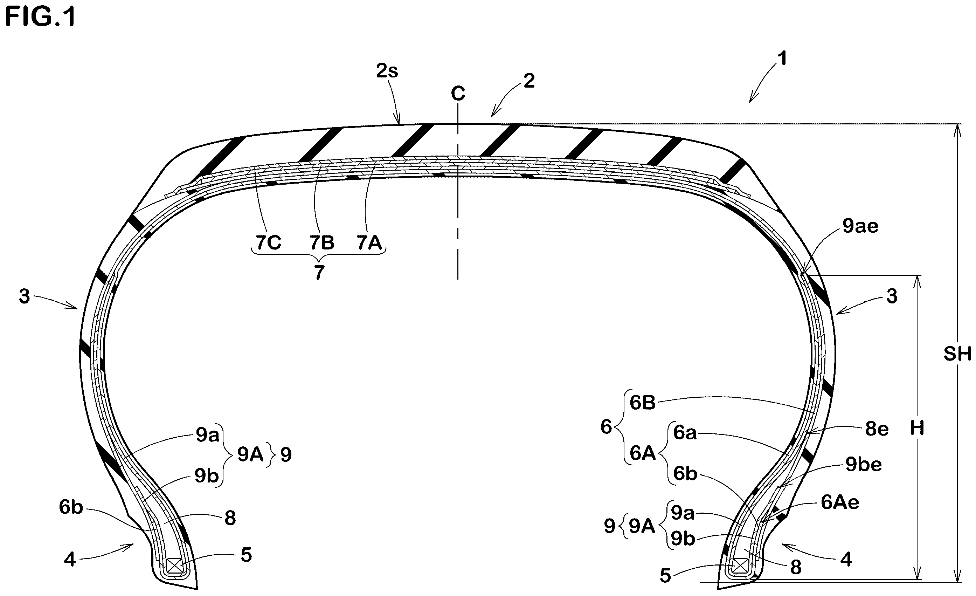

FIG. 1 is a tire meridian cross-sectional view showing a pneumatic tire 1 according to the present embodiment under its standard state.

Here, the "standard state" of a pneumatic tire means a state of the tire which is mounted on a standard rim and inflated to a standard pressure, but loaded with no tire load.

In this application including specification and claims, dimensions and positions of each part or portion of the tire refer to those under the standard state unless otherwise noted,

In the case that the pneumatic tire 1 is a type of pneumatic tire for which various standards have been established, the "standard wheel rim" is a wheel rim specified for the tire in a standard system including standards on which the tire is based, for example, the "Standard rim" in JATMA, "Design Rim" in TRA, "Measuring Rim" in ETRTO.

In the case that the pneumatic tire 1 is a tire for which various standards are not yet established, the "standard wheel rim" means a wheel rim having a smallest rim diameter and a smallest rim width among the wheel rims that can be assembled with the tire without causing air leakage.

In the case that the pneumatic tire 1 is a type of pneumatic tire for which various standards have been established, the "standard tire pressure" is the air pressure specified for the tire in a standard system including standards on which the tire is based, for example, the "maximum air pressure" in JATMA, "INFLATION PRESSURE" in ETRTO, and the maximum air pressure listed in the table "TIRE LOAD LIMITS AT VARIOUS COLD INFLATION PRESSURES" in TRA.

In the case that the pneumatic tire 1 is a tire for which various standards are not yet established, the "standard tire pressure" is the air pressure specified for the tire by the tire manufacturer or the like.

The pneumatic tire 1 shown in FIG. 1 has a structure suitable for high-speed running such as circuit running.
However, the present invention is not limited to such pneumatic tire, and can be applied to various pneumatic tires such as passenger car tires, heavy duty tires, motorcycle tires and the like.

The pneumatic tire 1 in the present embodiment comprises
a tread portion 2 having a ground contacting surface 2s,
a pair of sidewall portions 3 extending radially inwardly from both sides in the tire axial direction of the tread portion 2, and
a pair of bead portions 4 coming into contact with a wheel rim.

The bead portions 4 are located radially inside the sidewall portions 3, respectively.
In the present embodiment, an annular bead core 5 extending in the tire circumferential direction is embedded in each of the bead portions 4.

For example, the bead core 5 is made of at least one steel wire wound.

It is preferable that the pneumatic tire 1 comprises
a carcass 6 extending between the bead portions 4, and
a belt 7 disposed radially outside the carcass 6 in the tread portion 2.
In such pneumatic tire 1, deformation of the tread portion 2 when a load is applied can be suppressed by the belt 7, while reducing the tire weight.

In the present embodiment, the carcass 6 comprises a first carcass ply 6A of carcass cords (not shown) which are arranged at an angle of 60 to 90 degrees with respect to the tire circumferential direction.
It is preferable that the first carcass ply 6A comprises
a main portion 6a extending between the bead portions 4, and
a pair of turnup portions 6b continued from the main portion 6a and folded back around the bead cores 5 in the bead portions from the inside to the outside in the tire axial direction. Such first carcass ply 6A serves to achieve both suppression of deformation when a high load is applied and weight reduction.

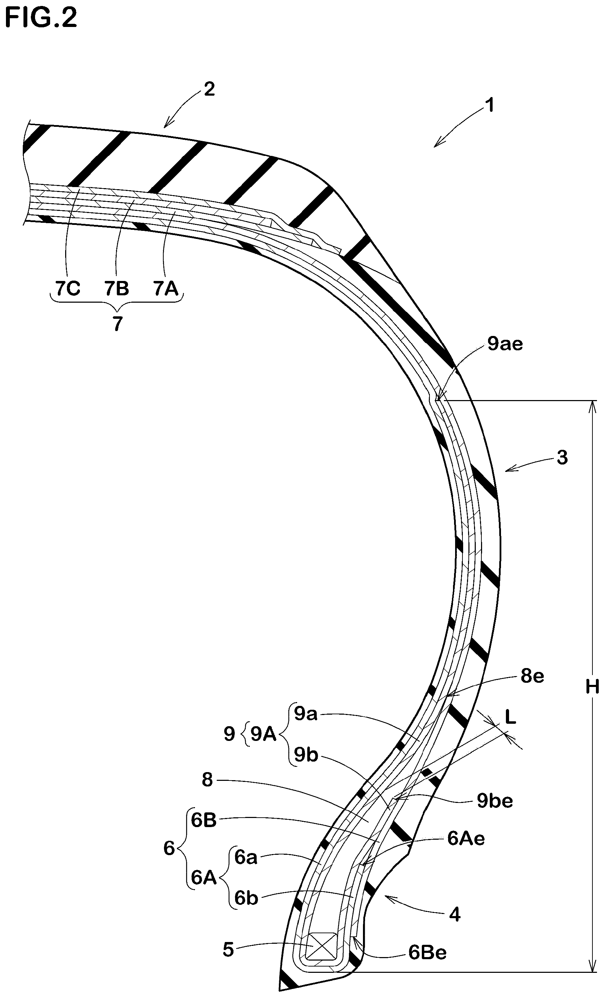

FIG. 2 shows the sidewall portion 3 and bead portion 4 of the pneumatic tire 1 in the present embodiment.
As shown in FIGS. 1 and 2, each of the bead portions 4 is provided with a bead apex rubber 8 and a bead reinforcing layer 9 in order that the bead reinforcing layer 9 can improve the stiffness of the bead portion 4 while achieving a tire weight reduction.

The bead apex rubber 8 extends radially outwardly from the bead core 5.

The bead reinforcing layer 9 in this example comprises a first reinforcing ply 9A of bead reinforcing cords (not shown) which are arranged at an angle of 60 to 90 degrees with respect to the tire circumferential direction.
Such bead reinforcing layer 9 can reduce the forward/backward stiffness while maintaining good vertical stiffness and lateral stiffness, and can improve the driving force of the pneumatic tire 1.

It is preferable that, in each of the bead portions 4, the first reinforcing ply 9A comprises a first portion 9a and a second portion 9b, the second portion 9b extending continuously from the first portion 9a.
The first portion 9a is, for example, a portion disposed along the main portion 6a of the first carcass ply 6A.
Preferably, the first portion 9a is disposed, abutting on the axially outer side of the main portion 6a.

The second portion 9b includes, for example, a portion which is folded back around the bead core 5 from the inner side to the outer side in the tire axial direction, and arranged along the turnup portion 6b of the first carcass ply 6A.
Preferably, the second portion 9b is disposed, abutting on the axially inner side of the turnup portion 6b.

In the present embodiment, the radially outer end 9be of the second portion 9b is located radially inside the radially outer end 8e of the bead apex rubber 8 on the axially outer side of the bead apex rubber 8.
Such bead reinforcing layer 9 can generate tension in the bead reinforcing cords when the bead apex rubber 8 is deformed, and can improve lateral stiffness of the bead portion during cornering.
Therefore, the pneumatic tire 1 of the present embodiment can be improved in driving force and steering stability while achieving a tire weight reduction.

Preferably, the radially outer end 9be of the second portion 9b is located radially inside the radially outer end 9ae of the first portion 9a.
Such bead reinforcing layer 9 can suppress damage starting from the radially outer end 9be of the axially outwardly located second portion 9b, and thereby can improve the durability of the pneumatic tire 1.

Preferably, the minimum distance L between the radially outer end 9be of the second portion 9b and the axially outer surface of the first portion 9a is not less than 0.5 mm.
By setting the minimum distance L to 0.5 mm or more, it becomes possible to reliably generate tension in the bead reinforcement cords when the bead apex rubber 8 is deformed.

As shown in FIG. 1, the height H in the tire radial direction (of the first portion in this example) of the first reinforcing ply 9A is preferably not less than 10% of the cross-sectional height SH of the tire.
By setting the height H to 10% or more of the cross-sectional height SH, the contact area between the first reinforcing ply 9A and the bead apex rubber 8 can be secured, and it becomes possible to reliably generate the tension of the bead reinforcing cords when the bead apex rubber 8 is deformed.

From this viewpoint, the height H of the first reinforcing ply 9A is more preferably set to be 20% or more of the cross-sectional height SH.

On the other hand, from the viewpoint of weight reduction, it is preferable that the height H of the first reinforcing ply 9A is 80% or less of the cross-sectional height SH.

Accordingly, the height H of the first reinforcing ply 9A is preferably 10% to 80%, more preferably 20% to 80% of the cross-sectional height SH.

In the present embodiment, the radially outer end 9ae of the first portion 9a of the first reinforcing ply 9A is located radially outside the maximum tire section width position (about one half of SH).

Incidentally, the bead reinforcing layer 9 may further include another reinforcing ply (not shown) in addition to the first reinforcing ply 9A, for example.

It is preferable that the complex elastic modulus of the bead apex rubber 8 at 70 degrees C is 55 to 70 MPa.
By setting the complex elastic modulus of the bead apex rubber 8 to 55 MPa or more, the stiffness of the bead portion 4 can be improved.
By setting the complex elastic modulus of the bead apex rubber 8 to 70 MPa or less, deformation which is sufficient to generate tension in the bead reinforcing layer 9 can be ensured.

In this specification, the complex elastic modulus is measured using a dynamic viscoelasticity measuring device (EPLEXER series developed by GABO) under the following conditions in accordance with the provisions of JIS-K6394 "Rubber, vulcanized or thermoplastic - Determination of dynamic properties - General guidance".
Initial strain: 5%
Dynamic strain amplitude: +/-1%
Frequency: 10 Hz
Deformation mode: Stretch
Measurement temperature: 70 deg. C

It is preferable that the radially outer end 6Ae of the turnup portion 6b of the first carcass ply 6A is located radially inside the radially outer end 9be of the second portion 9b of the first reinforcing ply 9A.
Such first carcass ply 6A can suppress possible damage starting from the radially outer end 6Ae of the turnup portion 6b, and can improve the durability of the pneumatic tire 1.

It is preferable that the carcass 6 comprises a second carcass ply 6B disposed radially outside the first carcass ply 6A in the tread portion 2.
The second carcass ply 6B in this example extends between the bead portions 4 through the tread portion 2 and sidewall portions 3.
From the sidewall portion to the bead portion, the second carcass ply 6B extends radially inwardly on the axially outer side of the bead apex rubber 8 and the axially outer side of the bead reinforcing layer 9, and has a radially inner end 6Be terminated in the bead portion 4 without being folded back around the bead core 5.
Such second carcass ply 6B can achieve both suppression of deformation when a high load is applied and weight reduction.

It is preferable that the radially inner end 6Be of the second carcass ply 6B is located radially inside the radially outer end 6Ae of the turnup portion 6b of the first carcass ply 6A.
In this example, the radially inner end 6Be of the second carcass ply 6B is located on the axially outer side of the bead core 5.
Such second carcass ply 6B can suppress possible damage starting from the radially outer end 6Ae of the turnup portion 6b of the first carcass ply 6A, and can improve the durability of the pneumatic tire 1.

The second carcass ply 6B in this example is made of a plurality of carcass cords (not shown) arranged at an angle of 60 to 90 degrees with respect to the tire circumferential direction like the first carcass ply 6A.
When the angle of the carcass cords of the first carcass ply 6A and the angle of the carcass cords of the second carcass ply 6B are less than 90 degrees, it is preferable that, with respect to the tire circumferential direction, the inclining direction of the carcass cords of the first carcass ply 6A is opposite to the inclining direction of the carcass cords of the second carcass ply 6B.
Such second carcass ply 6B can cooperate with the first carcass ply 6A to suppress deformation when a high load is applied.

In the present embodiment, the belt 7 is composed of a first belt ply 7A, a second belt ply 7B disposed on the radially outer side of the first belt ply 7A, and a third belt ply 7C disposed on the radially outer side of the second belt ply 7B.
Such belt 7 can increase the stiffness of the tread portion 2, suppress deformation when loaded, and improve the steering stability of the pneumatic tire 1.

In the present embodiment, the first belt ply 7A is disposed on the radially outside of the second carcass ply 6B.
Preferably, the first belt ply 7A is made of parallel belt cords (not shown) arranged at an angle of from 24 to 45 degrees with respect to the tire circumferential direction.
Such first belt ply 7A can maintain appropriate lateral stiffness in cooperation with bead reinforcing layer 9, and help to improve the steering stability of the pneumatic tire 1.

The second belt ply 7B in this example is made of parallel belt cords (not shown) arranged at an angle of 24 to 45 degrees with respect to the tire circumferential direction like the first belt ply 7A.
With respect to the tire circumferential direction, the inclining direction of the belt cords of the first belt ply 7A is preferably opposite to the inclining direction of the belt cords of the second carcass ply 6B.
Such second carcass ply 6B can work together with the first belt ply 7A to increase the stiffness of the tread portion 2, suppress deformation when loaded, and improve the steering stability of the pneumatic tire 1.

For example, the third belt ply 7C may be made of a plurality of parallel belt cords (not shown) arranged at an inclination angle with respect to the tire circumferential direction, similarly to the first belt ply 7A and the second carcass ply 6B, or a belt cord arranged substantially parallel to the tire circumferential direction, for example, wound spirally in the tire circumferential direction.
Such third belt ply 7C can work together with the first belt ply 7A and the second carcass ply 6B to increase the stiffness of the tread portion 2, suppress deformation when loaded, and improve the steering stability of the pneumatic tire 1.

While detailed description has been made of an especially preferable embodiment of the present invention, the present invention can be embodied in various forms as defined by the appended claims.

### Description of the Reference signs

- 1: pneumatic tire
- 4: bead portion
- 6: carcass
- 6A: first carcass ply
- 6a: main portion
- 6b: turnup portion
- 8: bead apex rubber
- 8e: radially outer end of bead apex rubber
- 9: bead reinforcing layer
- 9A: first reinforcing ply
- 9a: first portion
- 9b: second portion
- 9be: radially outer end of second portion

## Claims

1. A pneumatic tire (1) comprising:
a pair of bead portions (4) each with a bead core (5) embedded therein;
a carcass (6) extending between the bead portions (4) through a tread portion (2) and sidewall portions (3);
a bead reinforcing layer (9) disposed in each of the bead portions; and
a bead apex rubber (8) extending radially outwardly from the bead core in each of the bead portions,
wherein
the carcass (6) comprises a first carcass ply (6A) of carcass cords arranged at an angle of 60 to 90 degrees with respect to the tire circumferential direction,
the bead reinforcing layer (9) comprises a first reinforcing ply (9A) of bead reinforcing cords arranged at an angle of 60 to 90 degrees with respect to the tire circumferential direction,
the first carcass ply (6A) comprises a main portion (6a), and a pair of turnup portions (6b) continued from the main portion (6a) and each folded back around the bead core from the inside to the outside in the tire axial direction,
in each of the bead portions (4), the first reinforcing ply (9A) comprises a first portion (9a) disposed on the axially outside of the main portion (6a) of the first carcass ply, and
a second portion (9b) continued from the first portion and folded back around the bead core (4) from the inside to the outside in the tire axial direction so as to be disposed on the axially inside of the turnup portion (6b) of the first carcass ply, and
a radially outer end (9be) of the second portion (9b) is located on the axially outside of the bead apex rubber (8) and on the radially inside of a radially outer end (8e) of the bead apex rubber (8),
**characterized in that**
the carcass comprises a second carcass ply (6B) in addition to the first carcass ply (6A),
the second carcass ply (6B) is made of carcass cords arranged at an angle of 60 to 90 degrees with respect to the tire circumferential direction, and extends between the bead portions through the tread portion (2) and the sidewall portions (3), and
the second carcass ply (6B) extends radially inwardly from the tread portion (2) to each of the bead portions (4), abutting on the first carcass ply (6A), an axially outer side of the first portion of the bead reinforcing layer (9), an axially outer side of the bead apex rubber (8), an axially outer side of the second portion the bead reinforcing layer (9), and an axially outer side of the turnup portion of the first carcass ply (6A) in this order, and terminates in the bead portion (4) without being folded back around the bead core (5) to have a radially inner end on the axially outside of the bead core (5).

2. The pneumatic tire (1) according to claim 1, wherein
a radially outer end (9be) of the second portion (9b) is located radially inside a radially outer end (9ae) of the first portion (9a).

3. The pneumatic tire (1) according to claim 2, wherein
a minimum distance between the radially outer end (9be) of the second portion (9b) and the first portion is 0.5 mm or more.

4. The pneumatic tire (1) according to claim 1, 2 or 3, wherein
a height in the tire radial direction of the first reinforcing ply (9A) is 10% or more of a cross-sectional height of the tire.

5. The pneumatic tire (1) according to claim 4, wherein
the height in the tire radial direction of the first reinforcing ply (9A) is 20% to 80% of the cross-sectional height of the tire.

6. The pneumatic tire (1) according to any one of claims 1 to 5, wherein
a complex elastic modulus of the bead apex rubber at 70 degrees C is in a range from 55 to 70 MPa, wherein the complex elastic modulus is measured using a dynamic viscoelasticity measuring device in accordance with the provisions of JIS-K6394 under the following conditions: an initial strain of 5%, a dynamic strain amplitude of +/-1% , a frequency of 10 Hz, a stretch deformation mode and a temperature of 70 degrees C.

7. The pneumatic tire (1) according to any one of claims 1 to 6, wherein
the tread portion (2) is provided with a belt layer (7) disposed on the radially outside of the carcass (6), and
the belt layer (7) comprises a first belt ply (7A) of belt cords arranged at an angle of 24 to 45 degrees with respect to the tire circumferential direction.

8. The pneumatic tire (1) according to any one of claims 1 to 6, wherein
the tread portion (2) is provided with a belt layer disposed on the radially outside of the carcass (6), and
the belt is composed of a first belt ply (7A), a second belt ply (7B) disposed on the radially outer side of the first belt ply (7A), and a third belt ply (7C) disposed on the radially outer side of the second belt ply (7B),
the first belt ply (7A) is made of parallel belt cords arranged at an angle of from 24 to 45 degrees with respect to the tire circumferential direction,
the second belt ply (7B) is made of parallel belt cords arranged at an angle of 24 to 45 degrees with respect to the tire circumferential direction, and
the third belt ply (7C) is made of parallel belt cords arranged at an inclination angle with respect to the tire circumferential direction, or alternatively a belt cord arranged substantially parallel to the tire circumferential direction.

9. The pneumatic tire (1) according to any of the previous claims, wherein
the radially inner end of the second carcass ply (6B) is located radially inside the radially outer end of the turnup portion of the first carcass ply (6A).

## Patentansprüche

1. Luftreifen (1), umfassend:
ein Paar Wulstabschnitte (4) mit jeweils einem darin eingebetteten Wulstkern (5);
eine Karkasse (6), die sich zwischen den Wulstabschnitten (4) durch einen Laufflächenabschnitt (2) und Seitenwandabschnitte (3) erstreckt;
eine Wulstverstärkungsschicht (9), die in jedem der Wulstabschnitte angeordnet ist; und
einen Wulstkernreitergummi (8), der sich von dem Wulstkern in jedem der Wulstabschnitte radial nach außen erstreckt,
wobei
die Karkasse (6) eine erste Karkasslage (6A) aus Karkasskorden umfasst, die in einem Winkel von 60 bis 90 Grad in Bezug auf die Reifenumfangsrichtung angeordnet sind,
die Wulstverstärkungsschicht (9) eine erste Verstärkungslage (9A) aus Wulstverstärkungskorden umfasst, die in einem Winkel von 60 bis 90 Grad in Bezug auf die Reifenumfangsrichtung angeordnet sind,
die erste Karkasslage (6A) einen Hauptabschnitt (6a) und ein Paar Umschlagabschnitte (6b) umfasst, die sich von dem Hauptabschnitt (6a) fortsetzen und jeweils um den Wulstkern von der Innenseite zur Außenseite in der Reifenaxialrichtung umgeschlagen sind,
in jedem der Wulstabschnitte (4) die erste Verstärkungslage (9A) umfasst
einen ersten Abschnitt (9a), der an der axialen Außenseite des Hauptabschnitts (6a) der ersten Karkasslage angeordnet ist, und
einen zweiten Abschnitt (9b), der sich von dem ersten Abschnitt fortsetzt und um den Wulstkern (4) von der Innenseite zur Außenseite in der Reifenaxialrichtung umgeschlagen ist, so dass er an der axialen Innenseite des Umschlagabschnitts (6b) der ersten Karkasslage angeordnet ist, und
ein radial äußeres Ende (9be) des zweiten Abschnitts (9b) an der axialen Außenseite des Wulstkernreitergummis (8) und an der radialen Innenseite eines radial äußeren Endes (8e) des Wulstkernreitergummis (8) angeordnet ist,
**dadurch gekennzeichnet, dass**
die Karkasse zusätzlich zu der ersten Karkasslage (6A) eine zweite Karkasslage (6B) umfasst,
die zweite Karkasslage (6B) aus Karkasskorden hergestellt ist, die in einem Winkel von 60 bis 90 Grad in Bezug auf die Reifenumfangsrichtung angeordnet sind, und sich zwischen den Wulstabschnitten durch den Laufflächenabschnitt (2) und die Seitenwandabschnitte (3) erstreckt, und
die zweite Karkasslage (6B) sich von dem Laufflächenabschnitt (2) radial nach innen zu jedem der Wulstabschnitte (4) erstreckt und an der ersten Karkasslage (6A), einer axial äußeren Seite des ersten Abschnitts der Wulstverstärkungsschicht (9), einer axial äußeren Seite des Wulstkernreitergummis (8), einer axial äußeren Seite des zweiten Abschnitts der Wulstverstärkungsschicht (9) und einer axial äußeren Seite des Umschlagabschnitts der ersten Karkasslage (6A) in dieser Reihenfolge anliegt und in dem Wulstabschnitt (4) endet, ohne um den Wulstkern (5) umgeschlagen zu sein, so dass ein radial inneres Ende an der axialen Außenseite des Wulstkerns (5) vorhanden ist.

2. Luftreifen (1) nach Anspruch 1, wobei
ein radial äußeres Ende (9be) des zweiten Abschnitts (9b) radial innen von einem radial äußeren Ende (9ae) des ersten Abschnitts (9a) angeordnet ist.

3. Luftreifen (1) nach Anspruch 2, wobei
ein Mindestabstand zwischen dem radial äußeren Ende (9be) des zweiten Abschnitts (9b) und dem ersten Abschnitt 0,5 mm oder mehr beträgt.

4. Luftreifen (1) nach Anspruch 1, 2 oder 3, wobei
eine Höhe in der Reifenradialrichtung der ersten Verstärkungslage (9A) 10 % oder mehr einer Querschnittshöhe des Reifens beträgt.

5. Luftreifen (1) nach Anspruch 4, wobei
die Höhe in der Reifenradialrichtung der ersten Verstärkungslage (9A) 20 % bis 80 % der Querschnittshöhe des Reifens beträgt.

6. Luftreifen (1) nach einem der Ansprüche 1 bis 5, wobei
ein komplexer Elastizitätsmodul des Wulstkernreitergummis bei 70 Grad C in einem Bereich von 55 bis 70 MPa liegt, wobei der komplexe elastische Modul mit einem Messgerät für dynamische Viskoelastizität gemäß den Bestimmungen von JIS-K6394 unter folgenden Bedingungen gemessen wird: eine Anfangsdehnung von 5 %, eine dynamische Dehnungsamplitude von +/-1 %, eine Frequenz von 10 Hz, ein Dehnungsdeformationsmodus und eine Temperatur von 70 Grad C.

7. Luftreifen (1) nach einem der Ansprüche 1 bis 6, wobei
der Laufflächenabschnitt (2) mit einer Gürtelschicht (7) versehen ist, die an der radialen Außenseite der Karkasse (6) angeordnet ist, und
die Gürtelschicht (7) eine erste Gürtellage (7A) aus Gürtelkorden umfasst, die in einem Winkel von 24 bis 45 Grad in Bezug auf die Reifenumfangsrichtung angeordnet sind.

8. Luftreifen (1) nach einem der Ansprüche 1 bis 6, wobei
der Laufflächenabschnitt (2) mit einer Gürtelschicht versehen ist, die an der radialen Außenseite der Karkasse (6) angeordnet ist, und
der Gürtel aus einer ersten Gürtellage (7A), einer zweiten Gürtellage (7B), die an der radialen Außenseite der ersten Gürtellage (7A) angeordnet ist, und einer dritten Gürtellage (7C), die an der radialen Außenseite der zweiten Gürtellage (7B) angeordnet ist, zusammengesetzt ist,
die erste Gürtellage (7A) aus parallelen Gürtelkorden hergestellt ist, die in einem Winkel von 24 bis 45 Grad in Bezug auf die Reifenumfangsrichtung angeordnet sind,
die zweite Gürtellage (7B) aus parallelen Gürtelkorden hergestellt ist, die in einem Winkel von 24 bis 45 Grad in Bezug auf die Reifenumfangsrichtung angeordnet sind, und
die dritte Gürtellage (7C) aus parallelen Gürtelkorden, die in einem Neigungswinkel in Bezug auf die Reifenumfangsrichtung angeordnet sind, oder alternativ einem Gürtelkord, der im Wesentlichen parallel zu der Reifenumfangsrichtung angeordnet ist, hergestellt ist.

9. Luftreifen (1) nach einem der vorstehenden Ansprüche, wobei
das radial innere Ende der zweiten Karkasslage (6B) radial innen von dem radial äußeren Ende des Umschlagabschnitts der ersten Karkasslage (6A) angeordnet ist.

## Revendications

1. Bandage pneumatique (1) comprenant :
une paire de portions de talon (4) ayant chacune une âme de talon (5) noyée à l'intérieur ;
une carcasse (6) s'étendant entre les portions de talon (4) à travers une portion formant bande de roulement (2) et des portions formant parois latérales (3) ;
une couche de renforcement de talon (9) disposée dans chacune des portions de talon ; et
un caoutchouc d'apex de talon (8) s'étendant radialement vers l'extérieur depuis l'âme de talon dans chacune des portions de talon,
dans lequel
la carcasse (6) comprend une première nappe de carcasse (6A) de câblés de carcasse agencés sous un angle de 60 à 90 degrés par rapport à la direction circonférentielle du pneumatique,
la couche de renforcement de talon (9) comprend une première nappe de renforcement (9A) de câblés de renforcement de talon agencés sous un angle de 60 à 90 degrés par rapport à la direction circonférentielle du pneumatique,
la première nappe de carcasse (6A) comprend une portion principale (6a), et une paire de portions retroussées (6b) dans le prolongement de la portion principale (6a) et chacune étant repliée vers l'arrière autour de l'âme de talon depuis l'intérieur jusqu'à l'extérieur dans la direction axiale du pneumatique,
dans chacune des portions de talon (4), la première nappe de renforcement (9A) comprend une première portion (9a) disposée sur l'extérieur, axialement, de la portion principale (6a) de la première nappe de carcasse, et
une deuxième portion (9b) dans le prolongement de la première portion et repliée vers l'arrière autour de l'âme de talon (4) depuis l'intérieur jusqu'à l'extérieur dans la direction axiale du pneumatique de manière à être disposée sur l'intérieur, axialement, de la portion retroussée (6b) de la première nappe de carcasse, et
une extrémité radialement extérieure (9be) de la deuxième portion (9b) est située sur l'extérieur, axialement, du caoutchouc d'apex de talon (8) et sur l'intérieur, radialement, d'une extrémité radialement extérieure (8e) du caoutchouc d'apex de talon (8),
**caractérisé en ce que**
la carcasse comprend une deuxième nappe de carcasse (6B) en addition à la première nappe de carcasse (6A),
la deuxième nappe de carcasse (6B) est faite de câblés de carcasse agencés sous un angle de 60 à 90 degrés par rapport à la direction circonférentielle du pneumatique, et s'étend entre les portions de talon à travers la portion formant bande de roulement (2) et les portions formant parois latérales (3), et
la deuxième nappe de carcasse (6B) s'étend radialement vers l'intérieur depuis la portion formant bande de roulement (2) jusqu'à chacune des portions de talon (4), venant en butée sur la première nappe de carcasse (6A), un côté axialement extérieur de la première portion de la couche de renforcement de talon (9), un côté axialement extérieur du caoutchouc d'apex de talon (8), un côté axialement extérieur de la deuxième portion de la couche de renforcement de talon (9), et un côté axialement extérieur de la portion retroussée de la première nappe de carcasse (6A) dans cet ordre, et se termine dans la portion de talon (4) sans être repliée vers l'arrière autour de l'âme de talon (5) de façon à avoir une extrémité radialement intérieure sur l'extérieur, axialement, de l'âme de talon (5).

2. Bandage pneumatique (1) selon la revendication 1, dans lequel une extrémité radialement extérieure (9be) de la deuxième portion (9b) est située radialement à l'intérieur d'une extrémité radialement extérieure (9ae) de la première portion (9a).

3. Bandage pneumatique (1) selon la revendication 2, dans lequel une distance minimum entre l'extrémité radialement extérieure (9be) de la deuxième portion (9b) et la première portion est d'au moins 0,5 mm.

4. Bandage pneumatique (1) selon la revendication 1, 2 ou 3, dans lequel une hauteur dans la direction radiale du pneumatique de la première nappe de renforcement (9A) est d'au moins 10 % d'une hauteur en section transversale du pneumatique.

5. Bandage pneumatique (1) selon la revendication 4, dans lequel la hauteur dans la direction radiale du pneumatique de la première nappe de renforcement (9A) est de 20 % à 80 % de la hauteur en section transversale du pneumatique.

6. Bandage pneumatique (1) selon l'une quelconque des revendications 1 à 5, dans lequel
un module d'élasticité complexe du caoutchouc d'apex de talon à 70 degrés C est dans une plage allant de 55 à 70 MPa, le module d'élasticité complexe étant mesuré à l'aide d'un dispositif de mesurage de viscoélasticité dynamique conformément aux dispositions de la norme industrielle japonaise JIS-K6394 dans les conditions suivantes : contrainte initiale de 5 %, amplitude de contrainte dynamique de ± 1 %, fréquence de 10 Hz, mode de déformation en étirement, et température de 70 degrés C.

7. Bandage pneumatique (1) selon l'une quelconque des revendications 1 à 6, dans lequel
la portion formant bande de roulement (2) est pourvue d'une couche de ceinture (7) disposée sur l'extérieur, radialement, de la carcasse (6), et
la couche de ceinture (7) comprend une première nappe de ceinture (7A) en câblés de ceinture agencés sous un angle de 24 à 45 degrés par rapport à la direction circonférentielle du pneumatique.

8. Bandage pneumatique (1) selon l'une quelconque des revendications 1 à 6, dans lequel
la portion formant bande de roulement (2) est pourvue d'une couche de ceinture disposée sur l'extérieur, radialement, de la carcasse (6), et
la ceinture est composée d'une première nappe de ceinture (7A), d'une deuxième nappe de ceinture (7B) disposée sur le côté radialement extérieur de la première nappe de ceinture (7A), et d'une troisième nappe de ceinture (7C) disposée sur le côté radialement extérieur de la deuxième nappe de ceinture (7B),
la première nappe de ceinture (7A) est faite de câblés de ceinture parallèles agencés sous un angle allant de 24 à 45 degrés par rapport à la direction circonférentielle du pneumatique,
la deuxième nappe de ceinture (7B) est faite de câblés de ceinture parallèles agencés sous un angle de 24 à 45 degrés par rapport à la direction circonférentielle du pneumatique, et
la troisième nappe de ceinture (7C) est faite de câblés de ceintures parallèles agencés sous un angle d'inclinaison par rapport à la direction circonférentielle du pneumatique, ou alternativement d'un câblé de ceinture agencé sensiblement parallèlement à la direction circonférentielle du pneumatique.

9. Bandage pneumatique (1) selon l'une quelconque des revendications précédentes, dans lequel
l'extrémité radialement intérieure de la deuxième nappe de carcasse (6B) est située radialement à l'intérieur de l'extrémité radialement extérieure de la portion retroussée de la première nappe de carcasse (6A).
